# EUROPÄISCHE PATENTSCHRIFT

(11) **EP 0 999 926 B1**
(45) Veröffentlichungstag und Bekanntmachung des Hinweises auf die Patenterteilung: **31.10.2001**
(21) Anmeldenummer: 98941355.4
(22) Anmeldetag: 20.07.1998
(51) Int. Cl.: B29C 45/00

(54) **HOLMLOSE SPRITZGIESSMASCHINE**
INJECTION MOULDING MACHINE WITHOUT BACK PLATE
PRESSE D'INJECTION SANS SOMMIER

(30) Priorität: 28.07.1997 DE 19732337
(43) Veröffentlichungstag der Anmeldung: 17.05.2000
(73) Patentinhaber: HPM HEMSCHEIDT GmbH, 19061 Schwerin (DE)
(72) Erfinder: FÜLLER, Klaus, D-19061 Schwerin (DE); HOPP, Christian, D-19086 Consrade (DE)
(74) Vertreter: UEXKÜLL & STOLBERG
(86) Internationale Anmeldenummer: EP9804463
(87) Internationale Veröffentlichungsnummer: WO9906201

(56) Entgegenhaltungen:
- EP-A- 0 722 820
- DE-A- 19 633 688
- DE-C- 4 420 639

## Beschreibung

Die Erfindung bezieht sich auf eine Spritzgießmaschine nach dem Oberbegriff des Anspruchs 1.
Derartige Spritzgießmaschinen werden in der Kunststoffverarbeitung eingesetzt.

Holmlose Spritzgießmaschinen bestehen in der Hauptsache aus einem C-förmigen Maschinenrahmen mit einem Maschinenbett und zwei gegenüberliegenden Schenkeln. An einem Schenkel ist eine feste Werkzeugaufspannplatte und am anderen Schenkel eine feste Endplatte angeordnet. In der Endplatte und in dem dazugehörigen Schenkel ist eine antreibbare Verfahreinheit gelagert, die entlang von Führungaelementen zwischen der Endplatte und der festen Werkzeugaufspannplatte linear verfahrbar ist und die eine zweite Werkzeugaufspannplatte trägt.
Solche Spritzgießmaschinen besitzen eine nur geringe Kraftaufnahmefähigkeit über den Maschinenrahmen und sind daher nur begrenzt einsetzbar. Auf Grund der beim Spritzgießvorgang auftretenden großen Schließ- und Formauftreibkräfte kommt es zur Aufweitung des Maschinenrahmens und damit zu einer Schiefstellung beider Schenkel. Diese Schiefstellung überträgt sich zwangsläufig auf die beiden Werkzeughälften und erzeugt eine unparallele Werkzeugteilfuge, aus der Kunststoffmasse austreten kann.

Es gibt dazu eine Reihe von Versuchen, diese Unparallelitäten durch ausgleichende Dehnungselemente zwischen der Endplatte bzw. der festen Werkzeugaufspannplatte und den Schenkeln zu vermeiden.

Eine solche holmlose Spritzgießmaschine ist in der DE 44 20 639 C1 beschrieben.
Bei dieser Spritzgießmaschine sind die Endplatte und die feste Werkzeugaufspannplatte in den Schenkeln des Maschinenrahmens jeweils in mindestens zwei horizontalen rechtwinklig zur Spritzachse verlaufenden Lagerachsen oberhalb und unterhalb der Spritz- bzw. der Bewegungsachse befestigt. Dabei sind die Endplatte und die feste Werkzeugaufspannplatte jeweils unterhalb der Spritzachse über mindestens zwei elastisch verformbare Elemente so verbunden, daß die durch die auftretende Schließkraft erzeugte Aufweitung des C-förmigen Maschinenrahmens durch eine definierte elastische Verformung der Elemente teilweise ausgeglichen wird, so daß die Aufspannflächen der Werkzeugaufspannplatten ohne Winkelabweichung in ihrer senkrechten Lage verbleiben.
Dazu besitzt die Endplatte und die feste Werkzeugaufspannplatte eine untere und einer obere Lagerstelle, wobei jede untere Lagerachse gegenüber der oberen Lagerstelle in einem größeren horizontalen Abstand von der Senkrechten der Werkzeugaufspannplatte bzw. der Endplatte angeordnet ist und zwischen der Werkzeugaufspannplatte bzw. der Endplatte und der unteren Lagerachse die zwei elastisch verformbaren Elemente in Form von Druckstäben eingebunden sind. Diese Druckstäbe können auswechselbar gestaltet oder mit der Endplatte bzw. der festen Werkzeugaufspannplatte einstückig ausgeführt sein.
Jede Lagerstelle besteht aus mindestens zwei Lager, die aus je einer sich über die Breite des Maschinenrahmens erstreckenden Lagerachse und aus mehreren, im Maschinenrahmen und in der Endplatte bzw. der Werkzeugaufspannplatte befindlichen Lagerbuchsen gebildet werden.

Diese holmlose Spritzgießmaschine hat sich grundsätzlich bewährt und erfüllt in vollem Umfang die funktionellen Anforderungen.
Von Nachteil ist allerdings der hohe fertigungstechnische Aufwand und der erforderliche Einsatz von hochwerten Materialien zur Herstellung einer solchen Gleitlagerung für die Endplatte und für die feste Werkzeugaufspannplatte. Da insgesamt mindestens vier solcher Lagerstellen erforderlich werden, schlägt sich dieser Aufwand nachhaltig in den Herstellungskosten nieder.
Es hat sich auch gezeigt, daß die Gefahr des Festfressens der Gleitlager nicht ganz auszuschließen ist. Diese Gefahr steigt mit der Anzahl der Lager.

Es besteht daher die Aufgabe, bei holmlosen Spritzgießmaschinen der vorliegenden Gattung eine einfache und kostengünstige Lagerung von Endplatte und/oder fester Werkzeugaufspannplatte ohne Gleiteigenschaften zu entwickeln.

Diese Aufgabe wird durch die kennzeichnenden Merkmale des Anspruchs 1 gelöst.
Zweckdienliche Ausgestaltungen ergeben sich aus den Ansprüchen 2 bis 5.

Mit der Erfindung werden die genannten Nachteile des Standes der Technik beseitigt.
Insbesondere sind die Kosteneinsparungen bei der Herstellung der Lagerstellen für die Endplatte und die Werkzeugaufspannplatte bedeutsam.
Durch die Verwendung von Lagerstellen ohne gleitende Flächen entfallen die sonst erforderlichen Wartungsaufwendungen eines Gleitlagers und auch die Lebensdauer wird erhöht.
Es ist unter Umständen zweckmäßig, die neue Lagerung an einem Schenkel zu realisieren und mit einer bekannten Lagerung am anderen Schenkel zu kombinieren.

Die Erfindung soll nachstehend an Hand zweier Ausführungsbeispiele näher erläutert werden.

Dazu zeigen
- Fig. 1:: eine holmlose Spritzgießmaschine in der Seitenansicht mit auswechselbaren Druckstäben,
- Fig. 2:: eine holmlose Spritzgießmaschine in der Seitenansicht mit festen Stützarmen,
- Fig. 3:: Einzelheit einer Endplatte bzw. Werkzeugaufspannplatte mit auswechselbarem Druckstab,
- Fig. 4:: Einzelheit in zwei Ansichten einer End-plätte bzw. Werkzeugaufspannplatte mit festem Stützarm und

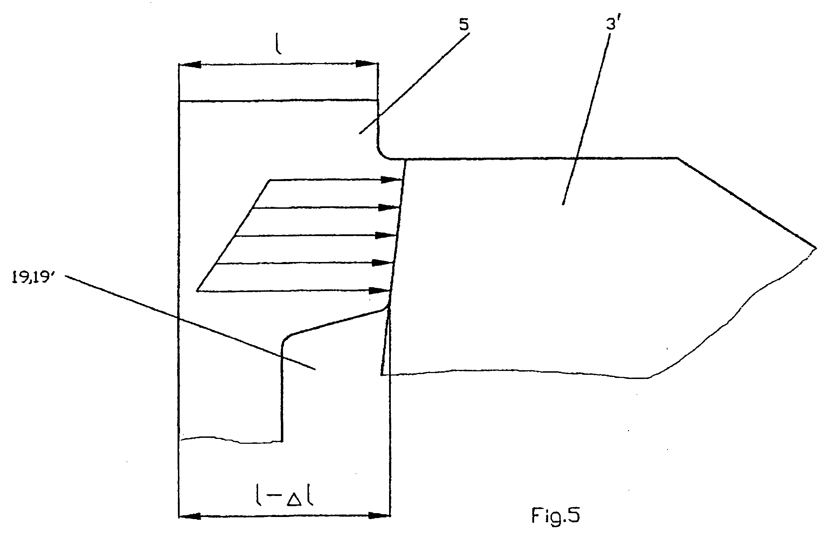

- Fig. 5:: Darstellung der Materialverformung im oberen Lager.

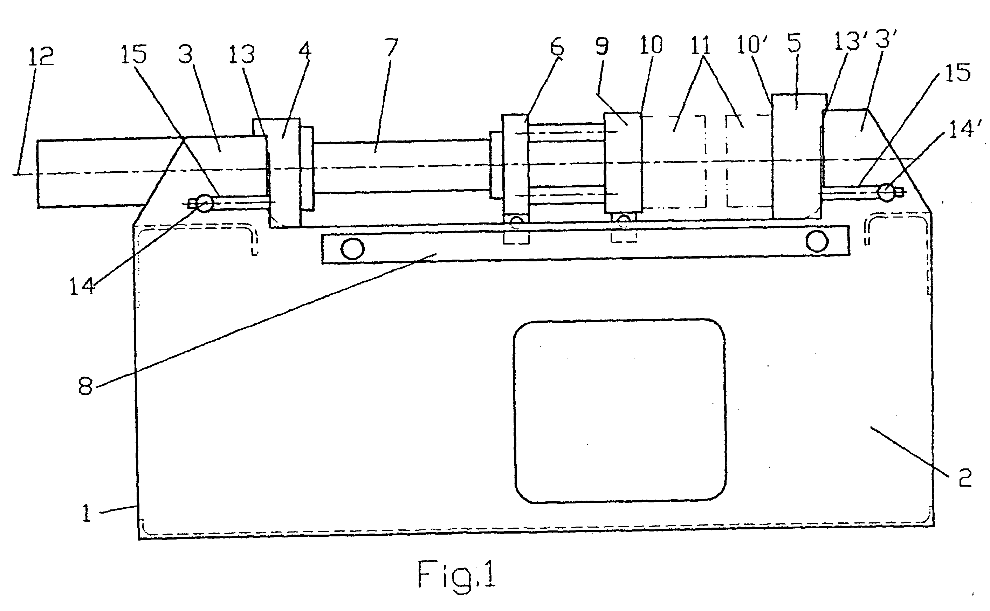

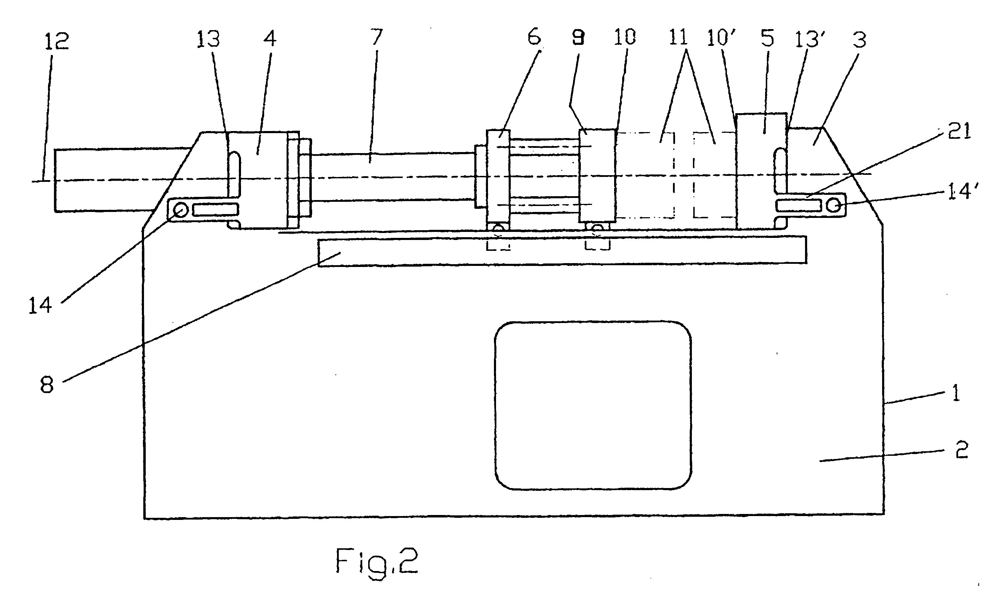

Gemäß den Fig. 1 und 2 besteht die holmlose Spritzgießmaschine aus einem Maschinenrahmen 1 mit einem Maschinenbett 2 und beidseitigen Schenkeln 3, 3'. Das Maschinenbett 2 und die beiden Schenkel 3, 3' sind C-förmig zueinander ausgebildet. An der Innenfläche des einen Schenkels 3 ist eine Endplatte 4 und an der Innenfläche des anderen Schenkels 3' ist eine Werkzeugaufspannplatte 5 starr aber lösbar befestigt. Zwischen beiden Schenkeln 3, 3' und damit zwischen der Endplatte 4 und der festen Werkzeugaufspannplatte 5 ist eine linear verschiebbare Verfahreinheit 6 angeordnet, die über eine, im Schenkel 3 gelagerte, Kolben-Zylindereinheit 7 antreibbar ist und die über den gesamten Verfahrweg über Führungsschienen 8 im Maschinenbett 2 geführt und abgestützt wird. Auf der zur festen Werkzeugaufspannplatte 5 zeigenden Seite befindet sich eine zweite Werkzeugaufspannplatte 9. Die einander gegenüberliegenden Flächen der festen Werkzeugaufspannplatte 5 und der beweglichen Werkzeugaufspannplatten 9 sind jeweils als Aufspannflächen 10, 10' für zwei Formwerkzeughälften 11 ausgelegt. Die Endplatte 4, die Verfahreinheit 6 und die feste Werkzeugaufspannplatte 5 sind auf einer gemeinsamen Bewegungsachse 12 angeordnet.

Sowohl die Endplatte 4 als auch die feste Werkzeugaufspannplatte 5 sind am jeweiligen Schenkel 3 bzw. 3' auf besondere Weise gelagert. So befinden sich an jedem Schenkel 3 und 3' des Maschinenrahmens 1 oberhalb der Bewegungsachse 12 eine Lagerstelle 13 und unterhalb der Bewegungsachse 12 eine Lagerstelle 14, wobei die untere Lagerstellen 14 horizontal und rechtwinklig zur Bewegungsachse 12 ausgerichtet ist und gegenüber der oberen Lagerachse 13 um einen bestimmten horizontalen Abstand weiter von der Senkrechten der Endplatte 4 bzw. der festen Werkzeugaufspannplatte 5 entfernt angeordnet ist.

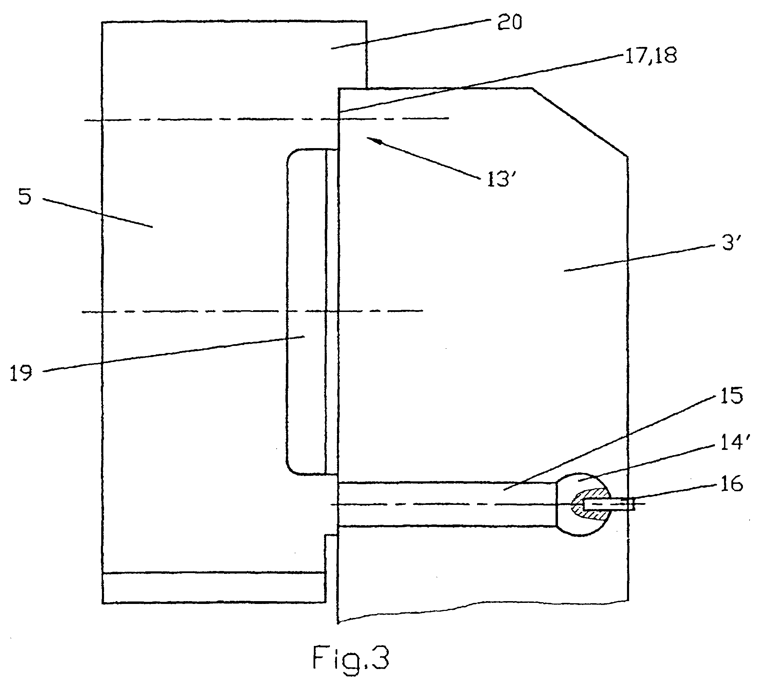

In der ersten Ausführungsform gemäß der Fig. 1 und 3 ist die untere Lagerstelle 14 mit der Endplatte 4 bzw. der festen Werkzeugaufspannplatte 5 über mindestens zwei, gleichmäßig auf der unteren Lagerebene verteilt angeordnete Druckstäbe 15 verbunden. Diese Druckstäbe 15 sind in ihren Materialstärken definiert vorbestimmt sowie lösbar und damit austauschbar gestaltet.
Weiterhin besitzt die Lagerstelle 14 eine Verdrehsicherung 16 zur Verweidung des Gleitens im Lager und damit der Gefahr des Festfressens.
Die obere Lagerstelle 13 ist dagegen als Stützlager ausgebildet, bei dem die Endplatte 4 und/oder die Werkzeugaufspannplatte 5 jeweils mit einer angearbeiteten Druckfläche 17 und die Schenkel 3, 3' mit entsprechenden Gegendruckflächen 18 ausgerüstet sind. Die Druckflächen 17 und die Gegendruckflächen 18 sind dabei senkrecht zur Bewegungsachse 12 ausgerichtet.
Gemäß der Fig. 3 besitzt die Endplatte 4 und/oder die Werkzeugaufspannplatte 5 einen Freiraum 19, der eine vorbestimmte vertikale Ausdehnung besitzt und mit dem gegebenen vertikalen Ausmaß des Schenkels 3, 3' die Druckfläche 17 in ihrer Größe und in ihrer Geometrie definiert. Dieser Freiraum 19, der alternativ auch im Schenkel 3, 3' eingebracht sein kann, soll auch die beabsichtigte Verformung der Endplatte 4 bzw. der Werkzeugaufspannplatte 5 gezielt unterstützen. Die Endplatte 4 bzw. Werkzeugaufspannplatte 5 ragen in der Vertikalen über die Schenkel 3, 3' hinaus und bilden in diesem Bereich jeweils eine Schulter 20 aus, die in ihrer horizontalen Erstreckung über den betreffenden Schenkel 3 bzw. 3' greift und so eine vertikale Lagefixierung der Endplatte 4 bzw. der Werkzeugauspannplatte 5 gegenüber den Schenkeln 3, 3' ermöglicht.

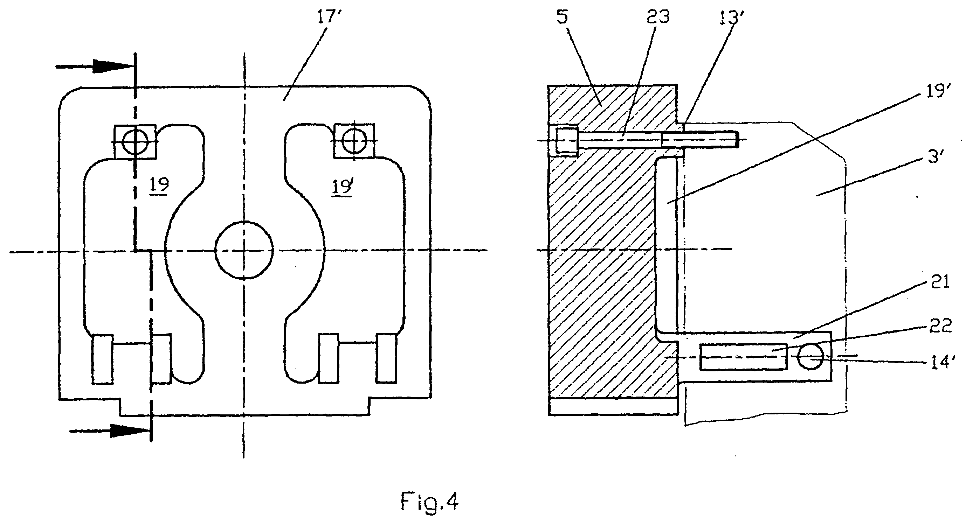

In der zweiten Ausführungsform gemäß der Fig. 2 und 4 ist die untere Lagerstelle 14' direkt mit der Endplatte 4 bzw. der festen Werkzeugaufspannplatte 5 verbunden. Dazu ist die Endplatte 4 bzw. die feste Werkzeugaufspannplatte 5 einstückig ausgeführt und besitzt mindestens zwei auf der gleichen Lagerebene angeordnete und auf Druck beanspruchbare Stützarme 21, die jeweils im Bereich zwischen der Lagerstelle 14' und der Endplatte 4 bzw. der Werkzeugaufspannplatte 5 eine Materialschwächung, beispielsweise eine Ausnehmung 22, aufweisen.
Diese Materialschwächung ist definiert vorbestimmt.
Die obere Lagerstelle 13' ist dagegen wieder als Stützlager ausgebildet, bei dem die Endplatte 4 bzw. die Werkzeugaufspannplatte 5 jeweils mit einer Druckfläche 17' und die Schenkel 3, 3' mit entsprechenden Gegendruckflächen 18' ausgerüstet sind. Die Druckflächen 17' und die Gegendruckflächen 18' sind dabei wieder senkrecht zur der Bewegungsachse 12 ausgerichtet.
Gemäß der Fig. 4 besitzt auch hier die Endplatte 4 bzw. die Werkzeugaufspannplatte 5 oder alternativ der Schenkel (3, 3') einen Freiraum 19', der eine vorbestimmte vertikale Ausdehnung besitzt und mit dem gegebenen vertikalen Ausmaß des Schenkels 3, 3' die Druckfläche 17' in ihrer Größe und Geometrie definiert und die angestrebte Plattenverformung gezielt unterstützt.
Zur Lagefixierung der Endplatte 4 bzw, der festen Werkzeugaufspannplatte 5 sowie zur Gewährleistung der Koaxialität der Plattenmitten sind mindestens zwei in Bewegungsrichtung der Verfahreinheit 6 ausgerichtete Paßschrauben 23 eingesetzt, die alternativ natürlich auch durch Schrauben und Stifte bzw. Paßfedern ersetzt sein können.

Beim Aufbau der Schließkraft durch die Verfahreinheit 6 werden beiden Werkzeugaufspannplatten 5 und 9 aneinandergepreßt, wobei der entsprechende Gegendruck durch den Maschinenrahmen 1 aufgebracht wird. Die dabei wirkenden Kräfte weiten den Maschinenrahmen 1 auf, sodaß die Schenkeln 3, 3' auseinander und in eine Schiefstellung verformt werden. Diese Schiefstellung jedes Schenkels 3 bzw. 3' führt zu einer Verkürzung des horizontalen Abstandes der oberen Lagerstelle 13 bzw. 13' zur unteren Lagerstelle 14 bzw. 14'. Durch die gleichmäßige Kraftverteilung innerhalb der Endplatte 4 bzw. der festen Werkzeugaufspannplatte 5 kommt es an der schwächsten Stelle, und das sind die Druckstäbe 15 bzw. die Stützarme 21, zu einer Zusammenstauchung und damit zu einer Längenkürzung dieser Druckstäbe 15 bzw. Stützarme 21. Diese Längenkürzung entspricht auf Grund der konstruktiven Auslegung der Druckstäbe 15 bzw. der Stützarme 21 in etwa der Abstandsveringerung zwischen der oberen und der unteren Lagerstelle 13, 13' und 14, 14'.
Bei diesem Vorgang kommt es aber zu einer Abweichung der Endplatte 4 und der werkzeugaufspannplatte 5 aus der Senkrechten und zwar in entgegengesetzter Richtung, wodurch in den oberen Lagerstellen 13, 13' die Druckflächen 17 der Endplatte 4 bzw. der Werkzeugaufspannplatte 5 und die Gegendruckflächen 18, 18' der Schenkeln 3, 3' im begrenzten Maße aufeinander abrollen. Auf Grund der dadurch auftetenden unterschiedlichen Verformung der Druckflächen 18, 18' drückt sich der Schenkel 3, 3' in die weichere Endplatte 4 bzw. die Werkzeugaufspannplatte 5 ein und verformt sie elastisch in dem Maße, wie sich die Schiefstellung der Schenkel 3, 3' und der Endplatte 4 bzw. Werkzeugaufspannplatte 5 zueinander auf eine horizontale Längenerhöhung auswirken würde. Diese nicht gewollte Längenerhöhung gleicht die Verformung in etwa aus, wodurch die Endplatte 4 bzw. die Werkzeugaufspannplatte 5 in ihrer senkrechten Lage verbleiben.

Die Erfindung wurde an Hand einer Waagerechtspritzgießmaschine beschrieben. Es versteht sich, daß sich bei einer Spritzgießmaschine in senkrechter Bauart die verwendeten Kennzeichnungen wie z.B. horizontal und vertikal umkehren.

### Aufstellung der Bezugszeichen

- 1: Maschinenrahmen
- 2: Maschinenbett
- 3, 3': Schenkel
- 4: Endplatte
- 5: Werkzeugaufspannplatte, fest
- 6: Verfahreinheit
- 7: Kolben-Zylindereinheit
- 8: Führungsschiene
- 9: Werkzeugaufspannplatte, beweglich
- 10, 10': Aufspannfläche
- 11: Formwerkzeughälfte
- 12: Bewegungsachse
- 13, 13': Lagerstelle, oben
- 14, 14': Lagerstelle, unten
- 15: Druckstab
- 16: Verdrehsicherung
- 17, 17': Druckfläche
- 18, 18': Gegendruckfläche
- 19, 19': Freiraum
- 20: Schulter
- 21: Stützarm
- 22: Ausnehmung
- 23: Paßschraube

## Patentansprüche

1. Holmlose Spritzgießmaschine, bestehend aus
- einem C-förmigen Maschinenrahmen (1) mit einem Maschinenbett (2) und zwei Schenkeln (3, 3'), wobei an einem Schenkel (3') eine feste Werkzeugaufspannplatte (5) und am anderen Schenkel (3) eine Endplatte (4) angeordnet sind und
- einer linear antreibbaren Verfahreinheit (6), die zwischen der Endplatte (4) und der festen Werkzeugaufspannplatte (5) auf Führungsschienen (8) bewegbar ist und die eine bewegliche Werkzeugaufspannplatte (9) trägt, wobei
- die Endplatte (4), die feste Werkzeugaufspannplatte (5) und die bewegliche Werkzeugaufspannplatte (9) auf einer gemeinsamen Bewegungsachse (12) angeordnet sind und
- die Endplatte (4) und die feste Werkzeugaufspannplatte (5) in ihren Schenkeln (3, 3') jeweils in einer unterhalb der Bewegungsachse (12) angeordneten Lagerstelle (14, 14') und in einer oberhalb der Bewegungsachse (12) angeordneten Lagerstelle (13, 13') mehrfach gelagert sind,
- wobei jede untere Lagerstelle (14, 14') bezogen auf die Bewegungsachse (12) weiter von der testen und der beweglichen Werkzeugaufspannplatte (5, 9) entfernt ist als die obere Lagerstelle (13, 13') und über elastische Elemente mit der Endplatte (4) und der Werkzeugaufspannplatte (5) verbunden ist,
**dadurch gekennzeichnet, daß** die obere Lagerstelle (13, 13') als Stützlager ausgebildet ist, bei der
- die Endplatte (4) und die feste Werkzeugaufspannplatte (5) ebene und vertikal ausgerichtete Druckflächen (17, 17') und die Schenkeln (3, 3') entsprechende Gegendruckflächen (18, 18') besitzen und im Bereich der Druckflächen (17, 17') Zonen verstärkter Verformung ausgebildet sind, die der Abstandserhöhung zwischen der Endplatte (4) bzw. der festen Werkzeugaufspannplatte (5) und den Schenkeln (3, 3') bei einer relativen winkelabweichung entgegenwirkt und
- die Endplatte (4) und die feste Werkzeugaufspannplatte (5) gegenüber den Schenkeln (3, 3') eine senkrecht zur Bewegungsachse (12) gerichtete Lagefixierung besitzen.

2. Holmlose Spritzgießmaschine nach Anspruch 1, **dadurch gekennzeichnet, daß** die Druckflächen (17, 17) und die Gegendruckflächen (18, 18') durch Freiräume (19, 19') in der Endplatte (4) bzw. in der Werkzeugaufspannplatte (5) und durch die Außenkanten der Schenkel (3, 3') gebildet werden.

3. Holmlose spritzgießmaschine nach Anspruch 1, **dadurch gekennzeichnet, daß** die Druckflächen (17, 17') und die Gegendruckflächen (18, 18') durch Freiräume in den Schenkeln (3, 3') und durch die Außenkanten der Schenkeln (3, 3') gebildet werden.

4. Holmlose Spritzgießmaschine nach Anspruch 2 oder 3, **dadurch gekennzeichnet, daß** in der unteren Lagerstelle (14) austauschbare und elastisch verformbare Druckstäbe (15) eingesetzt sind und die Endplatte (4) bzw. die feste Werkzeugaufspannplatte (5) die Schenkel (3, 3') senkrecht zur Bewegungsachse (12) überragt und in diesem Bereich eine horizontale Schulter (20) ausbildet, die auf dem Schenkel (3, 3') aufliegt.

5. Holmlose Spritzgießmaschine nach Anspruch 4, **dadurch gekennzeichnet, daß** die untere Lagerstelle (14) eine Verdrehsicherung (16) besitzt.

6. Holmlose Spritzgießmaschine nach Anspruch 2 oder 3, **dadurch gekennzeichnet, daß** die Endplatte (4) bzw. die Werkzeugaufspannplatte (5) im Bereich der unteren Lagerstelle (14') in einstückiger Bauweise elastisch verformbare Stützarme (21) besitzt und die obere Lagerstelle (13) durch waagerecht zur Bewegungsachse (12) ausgerichtete Paßschrauben (23) fixiert und zusammengehalten wird.

7. Holmlose Spritzgießmaschine nach einem der Ansprüche 1 bis 6, **dadurch gekennzeichnet, daß** ein Schenkel (3, 3') mit dem Stützlager und der andere Schenkel (3, 3') mit einer herkömmlichen Lagerung ausgerüstet ist.

## Claims

1. An injection moulding machine without tie bars,. comprising
- a C-shaped machine frame (1) with a bench (2) and two limbs (3, 3'), a fixed tool clamping plate (5) being disposed on one limb (3') and an end plate (4) being disposed on the other limb (3), and
- a linearly driven travelling unit (6), which can move on guide rails (8) between the end plate (4) and the fixed tool clamping plate (5) and which bears a moveable tool clamping plate (9),
- the end plate (4), the fixed tool clamping plate (5) and the movable tool clamping plate (9) being disposed on a common axis of movement (12) and
- the end plate (4) and the fixed tool clamping plate (5) being mounted several times in their limbs (3, 3') respectively in a bearing (14, 14') disposed beneath the axis of movement (12) and in a bearing (13, 13') disposed above the axis of movement (12),
- each lower bearing (14, 14'), relative to the axis of movement (12), being positioned further from the fixed and the movable tool clamping plates (5, 9) than the upper bearing (13, 13') and being connected via elastic elements to the end plate (4) and the tool clamping plate (5),
**characterised in that** the upper bearing (13, 13') is constructed as a supporting bearing, in which
- the end plate (4) and the fixed tool clamping plate (5) possess flat and vertically aligned pressure faces (17, 17') and the limbs (3, 3') possess corresponding counter-pressure faces (18, 18') and, in the region of the pressure faces (17, 17'), zones of increased deformation are formed, which acts against the increase in distance between the end plate (4) or respectively the fixed tool clamping plate (5) and the limbs (3, 3') in the event of a relative angular deviation,
- the end plate (4) and the fixed tool clamping plate (5) with respect to the limbs (3, 3') possess a positional fixing directed perpendicularly to the axis of movement (12).

2. An injection moulding machine without tie bars according to Claim 1,
**characterised in that** the pressure faces (17, 17) and the counter-pressure faces (18, 18') are formed by clearances (19, 19') in the end plate (4) and respectively in the tool clamping plate (5) and by the outer edges of the limbs (3, 3').

3. An injection moulding machine without tie bars according to Claim 1,
**characterised in that** the pressure faces (17, 17') and the counter-pressure faces (18, 18') are formed by clearances in the limbs (3, 3') and by the outer edges of the limbs (3, 3').

4. An injection moulding machine without tie bars according to Claim 2 or 3,
**characterised in that** exchangeable and elastically deformable pressure bars (15) are inserted in the lower bearing (14) and the end plate (4) or respectively the fixed tool clamping plate (5) rises above the limbs (3, 3') perpendicularly to the axis of movement (12) and in this region forms a horizontal shoulder (20) which lies on the limb (3, 3').

5. An injection moulding machine without tie bars according to Claim 4,
**characterised in that** the lower bearing (14) has an anti-twist device (16).

6. An injection moulding machine without tie bars according to Claim 2 or 3,
**characterised in that** the end plate (4) or respectively the tool clamping plate (5) in the region of the lower bearing (14') possesses, in a single-part design, elastically deformable supporting arms (21) and the upper bearing (13) is fixed and held together by tight-fit screws (23) aligned horizontally to the axis of movement (12).

7. An injection moulding machine without tie bars according to one of Claims 1 to 6,
**characterised in that** one limb (3, 3') is equipped with the supporting bearing and the other limb (3, 3') with a conventional bearing.

## Revendications

1. Machine d'injection sans sommier, comprenant :
- un châssis de machine en forme de C, avec un bâti (2) et deux branches (3, 3'), l'une des branches (3') ayant une plaque fixe porte-outil (5) et l'autre branche (3) une plaque d'extrémité (4),
- un chariot (6) entraîné suivant un mouvement linéaire, mobile entre la plaque d'extrémité (4) et la plaque fixe (5) porte-outil, sur des rails de guidage (8), et portant une plaque porte-outil (9) mobile,
- la plaque d'extrémité (4), la plaque porte-outil fixe (5) et la plaque porte-outil mobile (9) étant installées suivant un axe de mouvement commun (12), et
- la plaque d'extrémité (4) et la plaque porte-outil fixe (5) étant montées par leurs branches (3, 3'), chaque fois dans un palier (14, 14') prévu en dessous de l'axe de mouvement (12) et dans un palier (13, 13') prévu au-dessus de l'axe de mouvement (12) suivant un montage à plusieurs paliers,
- chaque palier inférieur (14, 14') étant plus éloigné par rapport à l'axe de mouvement (12) de la plaque porte-outil fixe et de la plaque porte-outil mobile (5, 9) que le palier supérieur (13, 13') en étant relié par des éléments élastiques à la plaque d'extrémité (4) et à la plaque porte-outil (5),
**caractérisée en ce que**
- le palier supérieur (13, 13') est réalisé comme palier d'appui tel que :
- la plaque d'extrémité (4) et la plaque porte-outil fixe (5) comportent des surfaces de pression (17, 17') planes, alignées verticalement et les branches (3, 3') ont des surfaces de contre-pression (18, 18') correspondantes, et au niveau des surfaces de pression (17, 17'), il y a des zones à déformation renforcée, qui s'opposent à l'augmentation de la distance entre la plaque d'extrémité (4) ou la plaque porte-outil fixe (5) et les branches (3, 3') dans leur déviation angulaire relative, et
- la plaque d'extrémité (4) et la plaque porte-outil fixe (5) ayant par rapport aux branches (3, 3'), une fixation de position perpendiculaire à l'axe de mouvement (12).

2. Machine d'injection sans sommier selon la revendication 1,
**caractérisée en ce que**
les surfaces de pression (17, 17') et les surfaces de contre-pression (18, 18') sont formées par des espaces libres (19, 19') dans la plaque d'extrémité (4) ou dans la plaque porte-outil (5) et par les arêtes extérieures des branches (3, 3').

3. Machine d'injection sans sommier selon la revendication 1,
**caractérisée en ce que**
les surfaces de pression (17, 17') et les surfaces de contre-pression (18, 18') sont formées par des espaces libres dans les branches (3, 3') et par les arêtes extérieures des branches (3, 3').

4. Machine d'injection sans sommier selon la revendication 2 ou la revendication 3,
**caractérisée en ce que**
des barres de poussée (15) échangeables et déformables élastiquement sont logées dans les paliers inférieurs (14), et la plaque d'extrémité (4) ou la plaque porte-outil fixe (5) dépasse la branche (3, 3') perpendiculairement à l'axe de déplacement (12) et forme dans cette zone un épaulement horizontal (20) qui s'appuie sur la branche (3, 3').

5. Machine d'injection sans sommier selon la revendication 4,
**caractérisée en ce que**
le palier inférieur (14) possède un blocage en rotation (16).

6. Machine d'injection sans sommier selon la revendication 2 ou 3,
**caractérisée en ce que**
la plaque d'extrémité (4) ou la plaque porte-outil (5) possède dans la zone du palier inférieur (14'), suivant une construction en une seule pièce, des bras d'appui (21) déformables élastiquement et le point de palier supérieur (13) est bloqué et maintenu réuni par des vis de calibrage (23) horizontales par rapport à l'axe de déplacement (12).

7. Machine d'injection sans sommier selon l'une quelconque des revendications 1 à 6,
**caractérisée en ce qu'**
une branche (3, 3') est équipée du palier d'appui et l'autre branche (3, 3') d'un palier usuel.
